Europäisches Patentamt

European Patent Office

Office européen des brevets

(11) Publication number: **0 172 211**
**B1**

(12) **EUROPEAN PATENT SPECIFICATION**

(45) Date of publication of patent specification: **20.04.88**

(51) Int. Cl.⁴: **B 05 B 15/12**

(21) Application number: **85901025.8**

(22) Date of filing: **15.02.85**

(86) International application number:
**PCT/GB85/00063**

(87) International publication number:
**WO 85/03650 29.08.85 Gazette 85/19**

(54) IMPROVEMENTS IN OR RELATING TO SPRAY BOOTHS.

(30) Priority: **17.02.84 GB 8404199**
**20.08.84 US 642195**

(43) Date of publication of application:
**26.02.86 Bulletin 86/09**

(45) Publication of the grant of the patent:
**20.04.88 Bulletin 88/16**

(84) Designated Contracting States:
**DE FR GB**

(56) References cited:
**GB-A-2 119 280**
**US-A-1 774 072**
**US-A-4 285 270**

(73) Proprietor: **HADEN DRYSYS INTERNATIONAL LIMITED**
**7-12 Tavistock Square**
**London WC1H 9LZ (GB)**

(72) Inventor: **LYNHAM, Ian, Hubert**
**19 Fulmer Drive Gerrards Cross**
**Bucks SL9 7HH (GB)**
Inventor: **WINDALL, Roy, Sidney**
**10 Meadowlands Seal**
**Kent TN15 ODH (GB)**

(74) Representative: **Needle, Jacqueline et al**
**PAGE, WHITE & FARRER 5 Plough Place New Fetter Lane**
**London EC4A 1HY (GB)**

Courier Press, Leamington Spa, England.

## Description

The present invention relates to spray booths, and in particular to a method and apparatus for removing paint or other coating material from the air exhausted from a spray booth.

It is customary to extract air from a paint spray booth and to wash it with a cleaning liquid, generally water, to remove the paint entrained in the exhaust air. Examples of washing systems for the exhaust air from paint spray booths are described in British Patent Specifications Nos. 1165022, 1399805 and 2007542B.

GB—A—2119280 describes apparatus for removing coating material from air laden with the coating material comprising means for inducing flow in said material laden air, at least one tubular member through which said material laden air flow is arranged to pass, and means for supplying cleaning liquid to said tubular member, said tubular member being arranged such that said material laden air flows therethrough in intimate contact with said cleaning liquid.

The washing apparatus described in the prior art generally exhibit their best efficiency if a substantially constant volume of air flows therethrough. If the volume of air or the air speed varies, the characteristic performance of the washing apparatus will vary. This can present a problem in that it may be required to vary the volume of air flowing through the paint spray booth. Clearly if the air flow is so varied the efficiency of the washing apparatus can be impaired.

In some applications the volume of air flow through the booth must be reduced, and in other applications the volume of air flow can be substantially reduced without adversely affecting the painting operation. As the air supplied to the booth is generally conditioned to be at a predetermined temperature and humidity, any such reduction in the volumes used represents a substantial energy saving.

The present invention provides apparatus for removing coating material from air laden with coating material as defined above, characterised by auxiliary air supply means for supplying air to said tubular member, and means for controlling the volume of air supplied by said auxiliary air supply means whereby the total volume of material laden air and air supplied by said auxiliary air supply means flowing through said tubular member can be maintained substantially constant.

In one embodiment, the auxiliary air supply means comprises means for recirculating air exhausted from said tubular member back to said tubular member.

Preferably, a base plate is arranged to extend substantially horizontally and has an upper surface and a lower surface, and said tubular member passes through said base plate and is arranged to extend substantially vertically. Said means for supplying cleaning liquid is arranged to supply cleaning liquid onto the upper surface of the base plate such that the cleaning liquid passes through said tubular member in intimate contact with said material laden air. The tubular member may project relative to the base plate such that a pond for the cleaning liquid is defined on the upper surface of the base plate.

In an embodiment the base plate defines the base of an air supply chamber having one or more air inlets for receiving material laden air and one or more auxiliary air inlets for receiving air from said auxiliary air supply means.

In an embodiment said chamber is defined between said base plate and a substantially horizontally extending sub-floor which has one or more air inlets therein.

In an embodiment, the or each air inlet in the sub-floor may comprise a tubular member extending through the sub-floor and extending substantially vertically. Preferably, each tubular member projects above the sub-floor and means are provided to supply cleaning liquid to said sub-floor such that a pool of cleaning liquid can be supported on the sub-floor.

The tubular members extending through the base plate and through the sub-floor may be circular, rectangular, or any other shape in cross section, and these members may be of any size.

The auxiliary air supply means preferably comprises adjustable dampers for controlling the volume of the auxiliary air supplied to said washing means.

The base plate is preferably spaced above a floor or plate and the tubular members extending through the base plate are arranged such that the air and water flowing through the members impacts the floor or plate.

Apparatus as described above may be arranged in a spray booth to remove coating material from air exhausted from the spray booth, said spray booth further comprising an enclosure in which the coating material is sprayed, means for supplying air into said enclosure, and means for extracting air laden with the sprayed coating material from said enclosure.

Preferably, said air supplying means comprises an air supply fan, and a first control damper arranged to control the volume of air supplied by said air supply fan, and wherein said extracting means comprises an exhaust fan, and a second control damper arranged to control the volume of material laden air extracted by said exhaust fan. The exhaust fan is arranged to direct the extracted air to an outlet duct.

In one embodiment an auxiliary air inlet duct is provided in communication with the outlet duct and is arranged to supply air to said tubular member. This auxiliary air inlet duct is preferably controlled by means of a damper. Alternatively, the auxiliary air inlet duct can be connected by way of a damper controlled duct to the outlet side of the supply fan. It would also be possible to connect the auxiliary air inlet duct to atmosphere either directly or by way of an auxiliary supply fan.

The invention also extends to a method for removing material from air laden with the material, the method comprising the steps of flowing the material laden air in one direction through a tubular member, simultaneously flowing a cleaning liquid through said tubular member in said one direction, and arranging that said material laden air and said cleaning liquid come into intimate contact such that said material is washed out of the air by said cleaning liquid, the method being characterised by the steps of supplying auxiliary air to said tubular member, and controlling the volume of said auxiliary air such that the total volume of material laden air and auxiliary air flowing through said tubular member is maintained substantially constant.

Embodiments of the present invention will hereinafter be described by way of example, with reference to the accompanying drawings, in which:

Figure 1 shows a section through a paint spray booth illustrating a first embodiment of the invention, and

Figure 2 shows a section through a further paint spray booth illustrating a second embodiment of the invention.

The paint spray booths illustrated are of the type through which automobile bodies or other articles to be painted are moved by way of conveyor means (not shown). The articles are painted either automatically or manually by spray painting means.

It is customary to extract air from the paint spray booth and to wash it with a cleaning liquid, generally water, in order to remove paint entrained in the exhaust air. A supply of air is fed to the spray booth through a distributor. Before it is fed to the booth, this supply air may be conditioned by means of air conditioning means (not shown) such that it has a predetermined temperature, humidity and cleanliness.

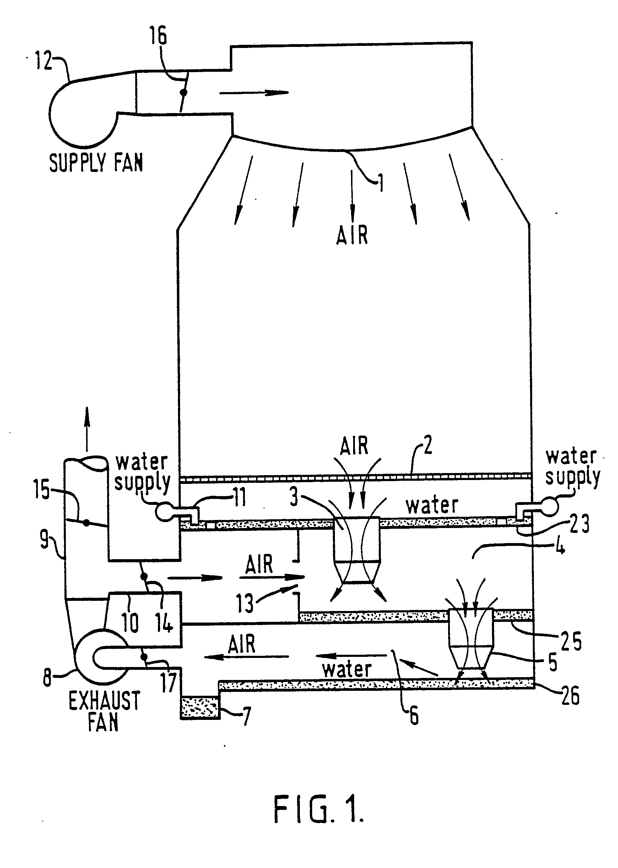

In the embodiment illustrated in Figure 1, the supply of air is fed to the spray booth through a distributor 1 by way of a supply fan 12. The air supplied to the booth passes over the articles to be spray painted where it becomes laden with paint. The paint laden air passes through floor grilles 2 and then through one or more substantially vertically extending exhaust tubes 3 provided in a substantially horizontal sub-floor 23 which extends across the booth beneath the grilles 2. A cleaning liquid, generally water which has been chemically treated to assist the adherence of paint particles to the water droplets, is fed to the sub-floor 23 by way of pumps (not shown) and pipes 11. The or each exhaust tube 3 is arranged to project above the level of the sub-floor 23 such that the sub-floor becomes flooded. The cleaning liquid is continuously supplied to the sub-floor and thus the liquid flows over the upper open end of each exhaust tube 3 and through the tube 3 in intimate contact with the air flowing therethrough. This washes paint from the air.

The or each exhaust tube 3, which may be circular, rectangular, or any other shape in cross section, communicates the upper side of the sub-floor 23 with a chamber 4. This chamber 4 has a substantially horizontal base plate 25 in which one or more substantially vertically extending exhaust tubes 5 are arranged. These exhaust tubes 5, which again may have any desired cross section, project above the level of the base plate 25 such that the cleaning liquid leaving the exhaust tubes 3 floods the base plate 25. The paint laden air is constrained to flow through the exhaust tubes 5 in intimate contact with the cleaning liquid for further washing of the air. The air-liquid mixture leaving the exhaust tubes 5 is arranged to impact a floor 26 such that the turbulence induced by this impact assists in the washing process. The floor 26 is arranged to define an air exhaust duct 6 through which the clean air is extracted by way of an exhaust fan 8. This clean air is then exhausted to atmosphere by way of an outlet duct 9.

The cleaning liquid in which the paint is now entrained passes into a flume 7 and thence to a reservoir (not shown). The paint can be removed from the cleaning liquid by any suitable means and then the liquid can be recirculated by way of the pumps (not shown) and the pipes 11 to the sub-floor 23. One apparatus for removing paint solids from a cleaning liquid is described in British Patent Specification No. 1540723.

As illustrated, all the cleaning liquid which has passed through the exhaust tubes 3 such that it is laden with paint subsequently passes through the exhaust tubes 5. If required, paint laden cleaning liquid can by pass the exhaust tubes 5 and flow directly into a flume. For example, a by pass tube (not shown) could communicate the flooded base plate 25 with the floor 26 such that a proportion of the paint laden cleaning liquid from the exhaust tubes 3 is fed directly to the flume 7 without passing through the exhaust tubes 5. If required, fresh cleaning liquid could also be fed to the base plate 25 for use in the exhaust tubes 5.

The effectiveness of the washing operation performed in the exhaust tubes 3 and 5 is dependent upon the speed and volume of air passing through the exhaust tubes, and for best results the air speed and volume flowing through each of the tubes should be kept substantially constant. However, it may be necessary to vary the volume of air flowing through the paint spray booth and this can present a problem as it would normally adversely affect the performance of the washing stages.

In the embodiment shown in Figure 1, the efficiency of the washing operation effected in the exhaust tubes 5 is maintained by ensuring that the air flow therethrough is kept substantially constant.

It will be seen that the chamber 4 with which the exhaust tubes 5 communicate, is communicated with the outlet duct 9 by way of an air inlet orifice 13 and an auxiliary air inlet duct 10. The flow of air in this auxiliary air inlet duct 10 is controlled by an adjusting damper 14 arranged in the duct 10. Similarly, dampers 15 and 17 are provided to control the extraction of air from the booth and its exhaust to atmosphere, and a further damper 16 is provided to control the supply of air to the paint spray booth.

The air flow through the booth can be reduced by adjustment of one or more of the dampers 15, 16, and 17, and/or by adjusting the speeds of the supply or exhaust fans. As the air supply through the booth is reduced, the damper 14 is adjusted such that exhaust air passes along the duct 10 and hence through the inlet orifice 13 into the chamber 4. The fans and dampers are so adjusted that the total volume of air passing through the exhaust tubes 5 remains substantially constant. Thus, the efficiency of the washing operation in the exhaust tubes 5 remains constant.

As the air flow through the booth is reduced, the volume of air flowing through the exhaust tubes 3 will be similarly reduced and hence the efficiency of the washing operation in these tubes could be reduced. The exhaust tubes 3 thus provide a preliminary, low efficiency washing stage whilst the exhaust tubes 5 provide a second, high efficiency washing stage.

The adjustment of the fans and dampers to provide the required air flows may be done manually or may be automatic. For example, a static pressure or velocity controller could be provided in the air supply or exhaust air ducts to initiate adjustment.

The overall efficiency of the washing system described for the paint booth is thus not impaired even though the air flow through the booth is reduced.

The arrangement illustrated in Figure 1 also has the advantage that the noise levels in the booth are reduced as the high efficiency washing stage constituted by the exhaust tubes 5 is remote from the interior of the booth.

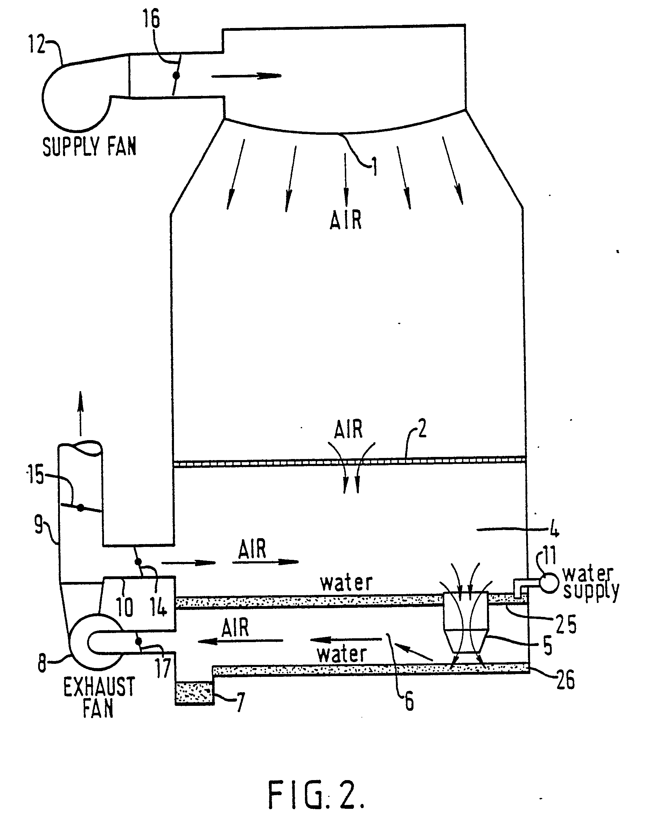

Figure 2 shows a second embodiment of a paint spray booth embodying the present invention. In Figure 2 features which are the same or similar to features of Figure 1 have been given the same reference numerals.

It will be seen that the embodiment of Figure 2 is very similar to that shown in Figure 1 such that it will not be described in detail. The only difference between the embodiments is that the low efficiency washing stage of Figure 1 defined by the exhaust tubes 3 has been omitted. The chamber 4 is thus defined by the base plate 25 and the floor grilles 2. Thus, Figure 1 shows a two-stage system whilst Figure 2 shows a single stage system. Of course, the single stage system of Figure 2 can be kept at a high efficiency because the air flow through the exhaust tubes 5 can be maintained substantially constant.

In both embodiments, the floor grilles 2 are provided when paint spraying operations are to be manually undertaken by operators who stand with the booth on these grilles. However, if the spray painting is to be done automatically by robots mounted on the side walls of the booth, these grilles 2 can be omitted.

Of course, if the floor grilles 2 are omitted in the embodiment of Figure 2, there is no longer a chamber 4 physically delimited with respect to the interior of the paint spray booth. However, exhaust air can still be fed to the exhaust tubes 5 by way of the auxiliary air inlet duct 10 and can still be adjusted by way of the dampers such that the volume of air passing through the exhaust tubes is kept substantially constant.

In the embodiments illustrated the auxiliary air fed to the exhaust tubes 5, for example, by way of the chamber 4, is recirculated from the exhaust air. However, if required, a fan may be provided to supply air directly to the inlet 13 from atmosphere. Alternatively, a duct communicating the inlet of the exhaust tubes 5 with the supply fan 12 can be provided such that a proportion of the supply air is diverted to provide the auxiliary air supply for the exhaust tubes 5. Preferably, the inlet air would be diverted to the exhaust tubes 5 before it is passed through any air conditioning means provided such that the amount of air to be conditioned is reduced. Clearly, this reduces the energy requirements of the air conditioning means.

In the embodiments illustrated, the washing stages are each constituted by a number of discrete tubes. If required, these tubes could be replaced by a continuous slot having downwardly depending side walls.

**Claims**

1. Apparatus for removing coating material from air laden with the coating material comprising means (8, 12) for inducing flow in said material laden air, at least one tubular member (5) through which said material laden air flow is arranged to pass, and means (11) for supplying cleaning liquid to said tubular member, said tubular member being arranged such that said material laden air flows therethrough in intimate contact with said cleaning liquid, the apparatus characterised by auxiliary air supply means (10) for supplying air to said tubular member (5), and means (14) for controlling the volume of air supplied by said auxiliary air supply means whereby the total volume of material laden air and air supplied by said auxiliary air supply means flowing through said tubular member can be maintained substantially constant.

2. Apparatus as claimed in Claim 1, wherein said auxiliary air supply means (10) comprises means for recirculating air exhausted from said tubular member (5) back to said tubular member.

3. Apparatus as claimed in Claim 1 or 2, wherein a base plate (25) is arranged to extend substantially horizontally and has an upper surface and a lower surface, and said tubular member (5) passes through said base plate and is arranged to extend substantially vertically, and wherein said means (11) for supplying cleaning liquid is arranged to supply cleaning liquid onto the upper surface of the base plate (25) such that the cleaning liquid passes through said tubular member in intimate contact with said material laden air.

4. Apparatus as claimed in Claim 3, wherein said tubular member (5) projects relative to the upper surface of the base plate (25) to thereby define a pond for the cleaning liquid on said upper surface.

5. Apparatus as claimed in Claim 3 or 4, wherein an air supply chamber (4) is provided, the base of said chamber being formed by said base plate (25) such that said tubular member (5) constitutes an air outlet for the chamber, and wherein said air supply chamber (4) has at least one air inlet (3) for receiving material laden air, and at least one auxiliary air inlet (13) for receiving air from said auxiliary air supply means (10).

6. Apparatus as claimed in Claim 5, wherein the top of said air supply chamber (4) is defined by a substantially horizontally extending sub-floor (23), one or more orifice means (3) being provided in said sub-floor to form the air inlets for the material laden air.

7. Apparatus as claimed in Claim 6, wherein the or each orifice means comprises a tubular member (3) arranged to pass through said sub-floor (23) and to extend substantially vertically, and wherein said means (11) to supply cleaning liquid is arranged to supply the cleaning liquid onto said sub-floor.

8. Apparatus as claimed in any preceding claim, wherein the coating material is paint.

9. Apparatus as claimed in any preceding claim arranged in a spray booth to remove coating material from air exhausted from the spray booth, said spray booth further comprising an enclosure in which the coating material is sprayed, means (12,1) for supplying air into said enclosure, and means (8,9) for extracting air laden with the sprayed coating material from said enclosure.

10. A spray booth as claimed in Claim 9, wherein said air supplying means comprises an air supply fan (12), and a first control damper (16) arranged to control the volume of air supplied by said air supply fan, and wherein said extracting means comprises an exhaust fan (8), and a second control damper (17) arranged to control the volume of material laden air extracted by said exhaust fan.

11. A spray booth as claimed in Claim 9 or 10, further comprising an outlet duct (9) into which air which has passed through said material removing apparatus is directed, an auxiliary air inlet duct (10) communicating with said outlet duct (9), said auxiliary air inlet duct being arranged to supply air to said tubular member (5), and control means (14) for controlling the flow of air from said outlet duct to said auxiliary air inlet duct.

12. A method for removing material from air laden with the material, the method comprising the steps of flowing the material laden air in one direction through a tubular member, simultaneously flowing a cleaning liquid through said tubular member in said one direction, and arranging that said material laden air and said cleaning liquid come into intimate contact such that said material is washed out of the air by said cleaning liquid, the method being characterised by the steps of supplying auxiliary air to said tubular member, and controlling the volume of said auxiliary air such that the total volume of material laden air and auxiliary air flowing through said tubular member is maintained substantially constant.

**Patentansprüche**

1. Vorrichtung zur Entfernung von Beschichtungsmaterial aus mit solchem Beschichtungsmaterial belasteter Luft, umfassend Mittel (8,12) zur Erzeugung eines Fließens in besagter materialbelasteter Luft, zumindest ein rohrförmiges Bauteil (5), durch welches der materialbeladene Luftstrom fließen muß und Mittel (11) zum Zuführen von Reinigungsflüssigkeit zu dem genannten rohrförmigen Bauteil, wobei das rohrförmige Bauteil so angeordnet ist, daß die mit Material beladene Luft durch dieses in engem Kontakt mit der Reinigungsflüssigkeit fließt, gekennzeichnet durch Luftzufuhrhilfsmittel (10) zur Zuführung der Luft zu dem genannten rohrförmigen Bauteil (5) und Mittel (14) zur Steuerung des Volumens der Luft, die durch die genannten Luftzufuhrhilfsmittel zugeführt wird, wobei das Gesamtvolumen der materialbeladenen Luft und der durch die Luftzufuhrhilfsmittel zugeführten Luft durch das genannte rohrförmige Bauteil im wesentlichen konstant gehalten werden kann.

2. Vorrichtung nach Anspruch 1, wobei die genannten Luftzufuhrhilfsmittel (10) Mittel zum Rezirkulieren der Luft umfassen, die aus dem genannten rohrförmigen Bauteil (5) abgegeben wird, zurück zu dem genannten rohrförmigen Bauteil.

3. Vorrichtung nach Anspruch 1 oder 2, wobei eine basisplatte (25) angeordnet ist, die sich im wesentlichen horizontal erstreckt und die eine obere und eine untere Fläche besitzt, und das genannte rohrförmige Bauteil (5) durch die genannte Basisplatte greift und so angeordnet ist, daß es sich im wesentlichen vertikal erstreckt und wobei die genannten Mittel (11) zum Zuführen der Reinigungsflüssigkeit so angebracht sind, daß die Reinigungsflüssigkeitszufuhr auf die obere Fläche der Basisplatte (25) erfolgt und zwar so, daß die Reinigungsflüssigkeit durch das genannte rohrförmige Bauteil in innigem Kontakt mit der genannten materialbelasteten Luft fließt.

4. Vorrichtung nach Anspruch 3, wobei das genannte rohrförmige Bauteil (5) relative zur oberen Fläche der Basisplatte (25) vorsteht, um dadurch ein Wehr für die Reinigungsflüssigkeit auf der genannten oberen Fläche zu definieren.

5. Vorrichtung nach Anspruch 3 oder 4, wobei eine Luftzufuhrkammer (4) vorgesehen ist, deren Basis durch die Basisplatte (25) gebildet ist, so daß das rohrförmige Bauteil (5) einen Luftauslaß für die Kammer bildet, und wobei die genannte Luftzufuhrkammer (4) mindestens einen Lufteintlaß (3) zur Aufnahme der materialbeladenen Luft und zumindest einen Hilfslufteinlaß (13) zur Aufnahme von Luft aus dem Hilfsluftversorgungsmittel (10) aufweist.

6. Vorrichtung nach Anspruch 5, wobei das obere Ende der genannten Luftzufuhrkammer (4) durch einen im wesentlichen sich horizontal erstreckenden Unterboden (23) begrenzt ist, wobei eine oder mehrere Öffnungen (3) im besagten Unterboden vorgesehen sind, die Lufteinlässe für die materialbelastete Luft bilden.

7. Vorrichtung nach Anspruch 6, wobei die oder alle Öffnungen ein rohrförmiges Teil (3) umfassen, welches so angeordnet ist, daß es den Unterboden (23) durchgreift und sich im wesentlichen vertikal erstreckt, und wobei die genannten Mittel (11) zur Zuführung der Reinigungsflüssigkeit so angeordnet sind, daß die Reinigungsflüssigkeit auf dem besagten Unterboden geführt wird.

8. Vorrichtung nach allen vorhergehenden Ansprüchen, wobei das Beschichtungsmaterial Farbe ist.

9. Vorrichtung nach einem der vorhergehenden Ansprüche, angeordnet in einer Sprühkabine zur Entfernung von Beschichtungsmaterial aus der Luft, die aus der Sprühkabine abgegeben wird, wobei die Sprühkabine ferner eine Einfriedung aufweist, in der das Beschichtungsmaterial versprücht wird, ferner Mittel (12,1) zur Zuführung von Luft in die genannte Einfriedung und Mittel (8,9) zum Abziehen der mit dem versprühten Beschichtungsmaterial belasteten Luft aus der Einfriedung aufweist.

10. Sprühkabine nach Anspruch 9, wobei die genannten Luftzufuhrmittel einen Luftzufuhrventilator (12) und einen ersten Steuerschieber (16) umfassen, der angeordnet ist, um das Volumen der durch den Luftzufuhrventilator zugeführten Luft zu steuern, und wobei die genannten Abzugzmittel einen Abzugsventilator (8) und einen zweiten Kontrollschieber (17) umfassen, der angeordnet ist, um das Volumen der materialbeladenen Luft zu steuern, die durch den Abzugsventilator abgezogen wird.

11. Sprühkabine nach Anspruch 9 oder 10, ferner umfassend eine Auslaßleitung (9), in welche Luft geleitet wird, die durch die genannte Materialentfernungsvorrichtung geströmt ist, eine zusätzliche Hilfslufteinlaßleitung (10), die mit der genannten Auslaßleitung in Verbindung steht, wobei die Hilfslufteinlaßleitung angeordnet ist, um Luft zu dem rohrförmigen Bauteil (5) zu führen, sowie Steuerungsmittel (14) zur Steuerung des Luftstromes aus der genannten Auslaßleitung zu der genannten Hilfslufteinlaßleitung.

12. Verfahren zur Entfernung von Material aus mit diesem Material beladener Luft, umfassend die Schritte des Fließens der materialbelasteten Luft in einer Richtung durch ein rohrförmiges Bauteil, gleichzeitiges Fließen einer Reinigungsflüssigkeit durch das genannte rohrförmige Bauteil in der genannten einen Richtung und dafür Sorge zu tragen, daß die genannte materialbeladene Luft und die genannte Reinigungsflüssigkeit in innigen Kontakt miteinander kommt, so daß das genannte Material aus der luft ausgewaschen wird mittels der Reinigungsflüssigkeit, gekennzeichnet durch die Verfahrensschritte, daß zusätzlich Hilfsluft dem genannten rohrförmigen Bauteil zugeführt wird und das Volumen der Hilfsluft so gesteuert wird, daß das Gesamtvolumen der materialbeladenen Luft und der Hilfsluft, welches durch das rohrförmige Bauteil fließt, im wesentlichen konstant gehalten wird.

**Revendications**

1. Appareil pour éliminer de la matière de revêtement d'air qui en est chargé comprenant un moyen (8,12) pour établir un courant dans ledit air chargé de matière, au moins un élément tubulaire (5) que l'on fait traverser par ledit courant d'air chargé de matière, et un moyen (11) pour l'envoi de liquide de nettoyage audit élément tubulaire, cet élément tubulaire étant agencé en sorte que ledit air chargé de matière le traverse en contact intime avec ledit liquide de nettoyage, l'appareil étant caractérisé par un moyen d'amenée d'air auxiliaire (10) pour amener de l'air audit élément tubulaire (5), et un moyen (14) pour régler le volume d'air amené par ledit moyen d'amenée d'air auxiliaire de façon que le volume total d'air chargé de matière et d'air amené par ledit moyen d'amenée d'air auxiliaire s'écoulant à travers ledit élément tubulaire puisse être maintenu sensiblement constant.

2. Appareil selon la revendication 1, dans lequel ledit moyen d'amenée d'air auxiliaire (10) comprend un moyen pour recycler jusqu'audit élément tubulaire (5) l'air mis à l'échappement à partir de cet élément tubulaire.

3. Appareil selon la revendication 1 ou 2, dans lequel une embase (25) est agencée pour s'étendre à peu près horizontalement et présente une surface supérieure et une surface inférieure, et ledit élément tubulaire (5) traverse ladite embase et est agencé pour s'étendre à peu près verticalement, et dans lequel ledit moyen (11) d'amenée de liquide de nettoyage est agencé pour amener du liquide de nettoyage sur la surface supérieure de l'embase (25) de façon que le liquide de nettoyage traverse ledit élément tubulaire en contact intime avec ledit air chargé de matière.

4. Appareil selon la revendication 3, dans lequel ledit élément tubulaire (5) dépasse par rapport à la surface supérieure de l'embase (25) pour définir par là un bassin de réception du liquide de nettoyage sur ladite surface supérieure.

5. Appareil selon la revendication 3 ou 4, dans lequel il est prévu une chambre d'arrivée d'air (4), la base de cette chambre étant formée par ladite embase (25) de sorte que ledit élément tubulaire (5) fait office de sortie d'air vis-à-vis de ladite chambre, et dans lequel ladite chambre d'amenée d'air (4) présente une entrée d'air (3) pour la réception d'air chargé de matière, et au moins une entrée d'air auxiliaire (13) pour la réception d'air à partir dudit moyen d'amenée d'air auxiliaire (10).

6. Appareil selon la revendication 5, dans lequel le haut de ladite chambre d'amenée d'air (4) est défini par un faux plancher s'étendant à peu près horizontalement (23), un ou plusieurs moyens à orifice (3) étant prévu dans ce faux plancher pour constituer les entrées d'air affectées à l'air chargé de matière.

7. Appareil selon la revendication 6, dans lequel le ou chaque moyen à orifice est un élément tubulaire (3) agencé pour traverser ledit faux plancher (23) et pour s'étendre à peu près verticalement, et dans lequel ledit moyen (11) d'amenée de liquide de nettoyage est agencé pour amener le liquide de nettoyage sur ledit faux plancher.

8. Appareil selon toute revendication précédente, dans lequel la matière de revêtement est de la peinture.

9. Appareil selon toute revendication précédente disposé dans une cabine de peinture au pistolet pour éliminer la matière de revêtement de l'air s'échappant de la cabine de peinture au pistolet, cette cabine de peinture au pistolet comprenant encore une enceinte dans laquelle la matière de revêtement est pulvérisée, un moyen (12,1) pour amener de l'air dans ladite enceinte, et un moyen (8,9) pour extraire de ladite enceinte de l'air chargé de la matière de revêtement pulvérisée.

10. Cabine de peinture au pistolet selon la revendication 9, dans laquelle ledit moyen d'amenée d'air comprend un ventilateur d'amenée d'air (12), et un premier registre de réglage (16) agencé pour régler le volume d'air amené par ledit ventilateur d'amenée, et dans lequel ledit moyen d'extraction comprend un ventilateur de mise à l'échappement (8), et un second registre de réglage (17) agencé pour régler le volume d'air chargé de matière extrait par ledit ventilateur de mise à l'échappement.

11. Cabine de peinture au pistolet selon la revendication 9 ou 10, comprenant encore un conduit de sortie (9) à l'intérieure duquel est envoyé de l'air qui a traversé ledit appareil d'élimination de matière, un conduit d'admission d'air auxiliaire (10) communiquant avec ledit conduit de sortie (9), ledit conduit d'admission d'air auxiliaire étant agencé pour amener de l'air audit élément tubulaire (5), et un moyen de réglage (14) pour régler le débit auquel de l'air passe dudit conduit de sortie audit conduit d'admission d'air auxiliaire.

12. Procédé pour éliminer de la matière d'air qui en est chargé, le procédé comprenant les opérations consistant à faire s'écouler l'air chargé de matière dans un sens à travers un élément tubulaire, à faire s'écouler simultanément un liquide de nettoyage à travers ledit élément tubulaire dans ledits sens, et à faire en sorte que ledit air chargé de matière et ledit liquide de nettoyage entrent en contact intime de façon que ladite matière soit extraite de l'air par lavage par ledit liquide de nettoyage, le procédé étant caractérisé par les opérations d'envoi d'air auxiliaire audit élément tubulaire, et de réglage du volume dudit air auxiliaire opéré en sorte que le volume total d'air chargé de matière et d'air auxiliaire traversant ledit élément tubulaire soit maintenu sensiblement constant.

FIG. 1.

FIG. 2.